# EUROPÄISCHE PATENTSCHRIFT

(11) **EP 0 675 914 B1**
(45) Veröffentlichungstag und Bekanntmachung des Hinweises auf die Patenterteilung: **04.06.1997**
(21) Anmeldenummer: 94903802.0
(22) Anmeldetag: 16.12.1993
(51) Int. Cl.: C08G 73/02, D21H 17/55, D21H 17/56

(54) **WASSERLÖSLICHE KONDENSATIONSPRODUKTE AUS AMINOGRUPPEN ENTHALTENDEN VERBINDUNGEN UND VERNETZERN, VERFAHREN ZU IHRER HERSTELLUNG UND IHRE VERWENDUNG**
WATER-SOLUBLE CONDENSATION PRODUCTS OF COMPOUNDS CONTAINING AMINO GROUPS WITH CROSS-LINKING AGENTS, METHOD OF PREPARING THEM AND THEIR USE
PRODUITS DE CONDENSATION SOLUBLES DANS L'EAU ISSUS DE COMPOSES ET DE RETICULANTS CONTENANT DES GROUPES AMINO; LEUR PROCEDE DE PREPARATION ET LEUR UTILISATION

(30) Priorität: 24.12.1992 DE 4244194
(43) Veröffentlichungstag der Anmeldung: 11.10.1995
(73) Patentinhaber: BASF Aktiengesellschaft, 67063 Ludwigshafen (DE)
(72) Erfinder: SCHERR, Guenter, D-67065 Ludwigshafen (DE); REUTHER, Wolfgang, D-69118 Heidelberg (DE); MOENCH, Dietmar, D-69469 Weinheim (DE); LINHART, Friedrich, D-69123 Heidelberg (DE); WEISER, Juergen, D-69189 Schriesheim (DE)
(86) Internationale Anmeldenummer: EP9303573
(87) Internationale Veröffentlichungsnummer: WO9414873

(56) Entgegenhaltungen:
- EP-A- 0 332 967
- WO-A-94/14873
- DE-A- 3 721 057
- FR-A- 2 094 084
- US-A- 3 293 195
- US-A- 4 144 123
- US-A- 4 730 022

## Beschreibung

Die Erfindung betrifft wasserlösliche Kondensationsprodukte aus Aminogruppen enthaltenden Verbindungen von mindestens bifunktionellen Vernetzern, Verfahren zu ihrer Herstellung durch Umsetzung von Aminogruppen enthaltenden Verbindungen mit monoethylenisch ungesättigten Carbonsäuren und deren Derivaten und mindestens bifunktionellen Vernetzern zu wasserlöslichen Kondensationsprodukten, und Verwendung der Kondensationsprodukte als Entwässerungs-, Flockungs- und Retentionsmittel bei der Herstellung von Papier.

Aus der US-A-4 144 123 ist ein Verfahren zur Herstellung von stickstoffhaltigen Kondensationsprodukten bekannt, bei dem man Polyamidoamine mit Ethylenimin pfropft und die so erhältlichen Umsetzungsprodukte mit α,ω-Bis(chlorhydrin)ethern von Polyalkylenoxyden bei Temperaturen von 20 bis 100°C reagieren läßt und die Reaktion bis zur Bildung hochmolekularer, gerade noch wasserlöslicher Harze führt, die - gemessen bei 20°C in 20 gew.-%iger wäßriger Lösung - eine Viskosität von mehr als 300 mPas aufweisen. Die so erhältlichen Kondensationsprodukte werden als Retentions-, Flockungs- und Entwässerungsmittel bei der Papierherstellung verwendet.

Aus der US-A-4 066 494 ist die Verwendung von stickstoffhaltigen Kondensationsprodukten auf Basis von Polyalkylenpolyaminen als Entwässerungsbeschleuniger und Retentionsmittel in der Papierindustrie bekannt. Die stickstoffhaltigen Kondensationsprodukte werden durch Umsetzung von Polyalkylenpolyaminen, die 15 bis 500 Alkylenimin-Einheiten enthalten, mit α,ω-Chlorhydrinethern von Polyethylenoxyden, die 18 bis 90 Ethylenoxyd-Einheiten enthalten, bei 20 bis 100°C unter Bildung hochmolekularer, noch wasserlöslicher Harze hergestellt.

Aus der DE-C-2 916 356 ist ein Verfahren zur Herstellung von wasserlöslichen Polyetheraminen bekannt, bei dem man Di- oder Polyamine mit 2 bis 10 Stickstoffatomen mit Chlorhydrinethern aus 1 Mol eines zweiwertigen Alkohols mit 2 bis 5 Kohlenstoffatomen, deren Ethoxylierungsprodukten, die bis zu 18 Ethylenoxyd-Einheiten enthalten, Glycerin oder Polyglycerin, das bis zu 15 Glycerineinheiten enthält, und mindestens 2 bis 8 Mol Epichlorhydrin zunächst in polaren, mit Wasser mischbaren Lösemitteln in Abwesenheit von Wasser oder unter weitgehendem Ausschluß von Wasser bei Temperaturen von 110 bis 200°C kondensiert und dann eine Alkalimetall- oder Erdalkalimetallbase in einer solchen Menge zugibt, um mindestens 20 % des bei der Kondensation entstehenden Chlorwasserstoffs zu neutralisieren. Im Anschluß daran erfolgt noch eine Nachkondensation. Die Kondensationsprodukte werden als Flokkungs-, Retentions- und Entwässerungsmittel bei der Herstellung von Papier verwendet.

Von den oben beschriebenen Kondensationsprodukten haben sich insbesondere die aus der US-A-4 144 123 bekannten Stoffe in der Praxis als Retentions- und Entwässerungsmittel bei der Papierherstellung bewährt. Sämtliche obengenannten Kondensationsprodukte verlieren jedoch an Wirksamkeit, wenn sie bei der Papierherstellung im sauren pH-Bereich in Gegenwart höherer Alaunmengen eingesetzt werden.

Der vorliegenden Erfindung liegt die Aufgabe zugrunde, neue Stoffe zur Verfügung zu stellen. Eine weitere Aufgabe besteht darin, für die Papierherstellung ein Prozeßhilfsmittel zur Verfügung zu stellen, das gegenüber den bekannten Stoffen eine bessere Wirksamkeit im sauren pH-Bereich besitzt.

Die Aufgaben werden erfindungsgemäß gelöst mit wasserlöslichen Kondensationsprodukten aus Aminogruppen enthaltenden Verbindungen und mindestens bifunktionellen Vernetzern, wobei die Kondensationsprodukte erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren nach Art einer Michael-Addition oder durch Reaktion mit Chlorcarbonsäuren und/oder Glycidylverbindungen der Formel 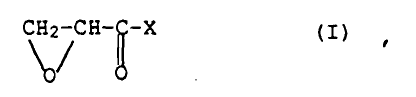 in der
   X = -NH₂, -OMe, -OR
   Me= H, Na, K, Ammonium und
   R = C₁- bis C₄-Alkyl oder C₂- bis C₄-Hydroxyalkyl bedeuten und
(c) mindestens bifunktionellen Vernetzern, die als funktionelle Gruppe einer Halogenhydrin-, Glycidyl-, Aziridin- oder Isocyanat-Einheit oder ein Halogenatom aufweisen, zu wasserlöslichen Kondensationsprodukten, die in 20 gew.-%iger wäßriger Lösung bei 20°C eine Viskosität von mindestens 100 mPas haben.

Die Aufgabe wird außerdem gelöst mit einem Verfahren zur Herstellung von wasserlöslichen Kondensationsprodukten der oben beschriebenen Art, wenn man die Verbindungen (a) mit den Verbindungen (b) umsetzt, wobei monoethylenisch ungesättigte Carbonsäuren, Salze, Ester, Amide oder Nitrile von monoethylenisch ungesättigten Carbonsäuren nach Art einer Michael-Addition umgesetzt werden, und die Umsetzungsprodukte anschließend mit den Verbindungen (c) zu wasserlöslichen Kondensationsprodukten reagieren läßt, die in 20 gew.-%iger wäßriger Lösung bei 20°C eine Viskosität von mindestens 100 mPas haben oder die Verbindungen (b) und (c) gleichzeitig mit den Verbindungen (a) umsetzt. Die oben beschriebenen Kondensationsprodukte werden als Entwässerungs-, Flockungs- und Retentionsmittel bei der Herstellung von Papier verwendet.

Als Komponente (a) kommen Polyalkylenpolyamine in Betracht. Unter Polyalkylenpolyaminen sollen im vorliegenden Zusammenhang Verbindungen verstanden werden, die mindestens 3 Stickstoffatome enthalten, z.B. Diethylentriamin, Triethylentetramin, Tetraethylenpentamin, Pentaethylenhexamin, Diaminopropylethylendiamin, Trisaminopropylamin und Polyethylenimine. Die Polyethylenimine haben vorzugsweise eine mittlere Molmasse (M_{w}) von mindestens 300. Die mittlere Molmasse der Polyethylenimine kann bis zu 1000000 betragen. Technisch von besonderem Interesse ist der Einsatz von Polyethyleniminen mit mittleren Molmassen von 1200 bis 25000.

Weitere geeignete Verbindungen der Gruppe (a) sind Polyamidoamine. Man erhält sie beispielsweise bei der Umsetzung von Dicarbonsäuren mit 4 bis 10 Kohlenstoffatomen mit Polyalkylenpolyaminen, die vorzugsweise 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Man kann auch Mischungen aus Carbonsäuren einsetzen, z.B. Mischungen aus Adipinsäure und Glutarsäure oder Maleinsäure und Adipinsäure. Bevorzugt verwendet man Adipinsäure zur Herstellung der Polyamidoamine. Geeignete Polyalkylenpolyamine, die mit den Dicarbonsäuren kondensiert werden, wurden oben bereits genannt, z.B. Diethylentriamin, Triethylentetramin, Dipropylentriamin, Tripropylentetramin, Dihexamethylentriamin, Aminopropylethylendiamin und Bis-Aminopropylethylendiamin. Die Polyalkylenpolyamine können auch in Form von Mischungen bei der Herstellung der Polyamidoamine eingesetzt werden. Die Herstellung der Polyamidoamine erfolgt vorzugsweise in Substanz, kann jedoch auch gegebenenfalls in inerten Lösemitteln vorgenommen werden. Die Kondensation der Dicarbonsäuren mit den Polyalkylenpolyaminen erfolgt bei höheren Temperaturen, z.B. in dem Bereich von 120 bis 220°C. Das bei der Reaktion gebildete Wasser wird aus dem Reaktionsgemisch abdestilliert. Die Kondensation kann gegebenenfalls auch in Gegenwart von Lactonen oder Lactamen von Carbonsäuren mit 4 bis 8 Kohlenstoffatomen vorgenommen werden. Pro Mol Dicarbonsäure verwendet man üblicherweise 0,8 bis 1,4 Mol eines Polyalkylenpolyamins. Die so erhältlichen Polyamidoamine weisen primäre und sekundäre NH-Gruppen auf und sind in Wasser löslich.

Als Komponente (a) kommen außerdem mit Ethylenimin gepfropfte Polyamidoamine in Betracht. Produkte dieser Art sind dadurch herstellbar, daß man Ethylenimin in Gegenwart von Säuren oder LewisSäuren, z.B. Schwefelsäure, Phosphorsäure oder Bortrifluoridetherat, auf die oben beschriebenen Polyamidoamine einwirken läßt. Unter den geschilderten Bedingungen wird Ethylenimin auf das Polyamidoamin aufgepfropft. Beispielsweise kann man pro basischer Stickstoffgruppierung im Polyamidoamin 1 bis 10 Ethylenimineinheiten aufpfropfen, d.h. auf 100 Gewichtsteile eines Polyamidoamins setzt man etwa 10 bis 500 Gewichtsteile Ethylenimin ein.

Weitere geeignete Verbindungen der Gruppe (a) sind Polyetheramine. Verbindungen dieser Art sind beispielsweise aus der eingangs genannten DE-C-2 916 356 bekannt. Wie dort angegeben ist, erhält man Polyetheramine durch Kondensieren von Di- und Polyaminen mit Chlorhydrinethern bei höheren Temperaturen. Die Polyamine können bis zu 10 Stickstoffatome enthalten. Die Chlorhydrinether werden beispielsweise durch Umsetzung von zweiwertigen Alkoholen mit 2 bis 5 Kohlenstoffatomen, den Alkoxilierungsprodukten dieser Alkohole mit bis zu 60 Alkylenoxideinheiten, Glycerin oder Polyglycerin, das bis zu 15 Glycerineinheiten enthält, Erythrit oder Pentaerythrit mit Epichlorhydrin hergestellt. Pro Mol eines der genannten Alkohole setzt man mindestens 2 bis 8 Mol Epichlorhydrin ein. Die Umsetzung der Di- und Polyamine mit den Chlorhydrinethern wird üblicherweise bei Temperaturen von 10 bis 200°C durchgeführt.

Polyetherpolyamine werden außerdem durch Kondensieren von Diethanolamin oder Triethanolamin nach bekannten Verfahren erhalten, vgl. US-A-4 404 362, US-A-4 459 220 und US-A-2 407 895.

Die oben beschriebenen Polyalkylenpolyamine können partiell amidiert sein. Produkte dieser Art werden beispielsweise durch Reaktion von Polyalkylenpolyaminen mit Carbonsäuren, Carbonsäureestern, Carbonsäureanhydriden oder Carbonsäurehalogeniden hergestellt. Die Polyalkylenpolyamine werden für die nachfolgenden Reaktionen vorzugsweise zu 1 bis 30, meistens nur bis zu 20 % amidiert. Die amidierten Polyalkylenpolyamine müssen nämlich noch freie NH-Gruppen aufweisen, damit sie mit den Verbindungen (b) und (c) umgesetzt werden können. Für die Amidierung der Polyalkylenpolyamine kann man beispielsweise Carbonsäuren mit 1 bis 28 Kohlenstoffatomen einsetzen. Geeignete Carbonsäuren sind beispielsweise Ameisensäure, Essigsäure, Propionsäure, Benzoesäure, Laurinsäure, Palmitinsäure, Stearinsäure, Ölsäure, Linolsäure und Behensäure. Eine Amidierung kann beispielsweise auch durch Umsetzung der Polyalkylenpolyamine mit Alkyldiketenen vorgenommen werden.

Die Polyalkylenpolyamine können auch in teilweise quaternierter Form als Verbindung der Gruppe (a) zum Einsatz gelangen. Geeignete Quaternierungsmittel sind beispielsweise Alkylhalogenide, wie Methylchlorid, Ethylchlorid, Butylchlorid, Epichlorhydrin, Hexylchlorid, Dimethylsulfat, Diethylsulfat und Benzylchlorid. Falls quaternierte Polyalkylenpolyamine als Verbindung der Gruppe (a) eingesetzt werden, beträgt der Grad der Quaternierung vorzugsweise 1 bis 30, üblicherweise nur bis zu 20 %, damit noch genügend freie NH-Gruppen für die Folgereaktionen zur Verfügung stehen.

Von den Verbindungen der Gruppe (a) verwendet man vorzugsweise Polyethylenimine eines mittleren Molekulargewichts von 1200 bis 25000, Polyamidoamine, die mit Ethylenimin gepfropft sind und bis maximal 20 % amidierte Polyethylenimine.

Geeignete monoethylenisch ungesättigte Carbonsäuren, die als Komponente (b) in Betracht kommen, haben beispielsweise 3 bis 18 Kohlenstoffatome im Molekül. Geeignete Verbindungen dieser Art sind beispielsweise Acrylsäure, Methacrylsäure, Dimethacrylsäure, Ethylacrylsäure, Allylessigsäure, Vinylessigsäure, Maleinsäure, Fumarsäure, Itaconsäure, Methylenmalonsäure, Zitrakonsäure, Ölsäure und Linolensäure. Vorzugsweise werden aus dieser Gruppe von Säuren Acrylsäure, Methacrylsäure und Maleinsäure eingesetzt. Die Salze der monoethylenisch ungesättigten Carbonsäuren, die ebenfalls als Verbindungen der Gruppe (b) in Betracht kommen, leiten sich von den Alkalimetall-, Erdalkalimetall- und Ammoniumsalzen der genannten Säuren ab. Praktische Bedeutung haben vor allem die Natrium-, Kalium- und Ammoniumsalze. Die Ammoniumsalze können sich sowohl von Ammoniak als auch von Aminen oder Aminderivaten wie Ethanolamin, Diethanolamin und Triethanolamin ableiten. Von den Erdalkalisalzen kommen vor allem Magnesium- und Calciumsalze der monoethylenisch ungesättigten Carbonsäuren in Betracht.

Die Ester der monoethylenisch ungesättigten Carbonsäuren leiten sich beispielsweise von einwertigen Alkoholen mit 1 bis 20 oder zweiwertigen Alkoholen mit 2 bis 6 Kohlenstoffatomen ab, z.B. Acrylsäuremethylester, Acrylsäureethylester, Acrylsäure-n-propylester, Acrylsäureisopropylester, Acrylsäure-n-butylester, Acrylsäureisobutylester, Methacrylsäuremethylester, Methacrylsäureethylester, Methacrylsäureisopropylester, Methacrylsäure-n-butylester, 2-Ethylhexylacrylat, 2-Ethylhexylmethacrylat, Palmitylacrylat, Laurylacrylat, Diarylacrylat, Laurylmethacrylat, Palmitylmethacrylat und Stearylmethacrylat, Dimethylmaleinat, Diethylmaleinat, Isopropylmaleinat, 2-Hydroxyethylacrylat, 2-Hydroxyethylmethacrylat, 2-Hydroxypropylacrylat, 3-Hydroxypropylacrylat, 2-Hydroxypropylmethacrylat, 3-Hydroxypropylmethacrylat, Hydroxybutylacrylat, Hydroxybutylmethacrylat und Hydroxyhexylacrylat und -methacrylat.

Geeignete Amide monoethylenisch ungesättigter Carbonsäuren sind beispielsweise Acrylamid, Methacrylamid und Ölsäureamid. Von den Nitrilen monoethylenisch ungesättigter Carbonsäuren kommen insbesondere Acrylnitril und Methacrylnitril in Betracht.

Geeignete Chlorcarbonsäuren der Gruppe (b) sind beispielsweise Chloressigsäure, 2-Chlorpropionsäure, 2-Chlorbuttersäure, Dichloressigsäure und 2,2'-Dichlorpropionsäure.

Als Verbindungen der Gruppe (b) kommen außerdem Glycidylverbindungen in Betracht, die mit Hilfe der Formel 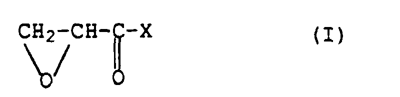 in der
X = -NH₂, -OMe, -OR
Me = H, Na, K, Ammonium und
R = C₁- bis C₄-Alkyl oder C₂- bis C₄-Hydroxyalkyl bedeuten,

charakterisiert werden können. Einzelne Verbindungen der Formel I sind beispielsweise Glycidylsäure, ihre Natrium-, Kalium-, Ammonium-, Magnesium- oder Calciumsalze, Glycidylsäureamid und Glycidylsäureester wie Glycidylsäuremethylester, Glycidylsäureethylester, Glycidylsäure-n-propylester, Glycidylsäure-n-butylester, Glycidylsäureisobutylester, Glycidylsäure-2-ethylhexylester, Glycidylsäure-2-hydroxypropylester und Glycidylsäure-4-hydroxybutylester. Von den Verbindungen der Formel I kommen vorzugsweise Glycidylsäure, ihre Natrium-, Kalium- oder Ammoniumsalze oder Glycidylsäureamid in Betracht.

Bevorzugt eingesetzte Verbindungen der Gruppe (b) sind Acrylsäure, Methacrylsäure und Maleinsäure oder auch Mischungen aus Acrylsäure und Maleinsäure oder Methacryläure und Maleinsäure in jeweils beliebigen Verhältnissen.

Als Verbindungen der Gruppe (c) kommen mindestens bifunktionelle Vernetzer in Betracht, die als funktionelle Gruppe eine Halogenhydrin-, Glycidyl-, Aziridin- oder Isocyanat-Einheit oder ein Halogenatom aufweisen. Geeignete Vernetzer sind beispielsweise Epihalogenhydrine, insbesondere Epichlorhydrin, sowie α,ω-Bis(chlorhydrin)polyalkylenglykolether und die daraus durch Behandlung mit Basen erhältlichen α,ω-Bis(epoxyde) von Polyalkylenglykolethern. Die Chlorhydrinether werden beispielsweise dadurch hergestellt, daß man Polyalkylenglykole im Molverhältnis 1 zu mindestens 2 bis 5 mit Epichlorhydrin umsetzt. Geeignete Polyalkylenglykole sind beispielsweise Polyethylenglykol, Polypropylenglykol und Polybutylenglykole sowie Blockcopolymerisate von C₂- bis C₄-Alkylenoxyden. Die mittleren Molmassen (M_{w}) der Polyalkylenglykole betragen z.B. 200 bis 6000 und liegen vorzugsweise in dem Bereich von 300 bis 2000 g/mol. α,ω-Bis(chlorhydrin)polyalkylenglykolether dieser Art werden beispielsweise in der zum Stand der Technik angegebenen US-A-4 144 123 beschrieben. Wie darin ebenfalls angegeben ist, entstehen aus den Dichlorhydrinethern durch Behandlung mit Basen die entsprechenden Bisglycidylether.

Außerdem eignen sich als Vernetzer α,ω-Dichlorpolyalkylenglykole, die beispielsweise als Vernetzer aus der EP-B-0 025 515 bekannt sind. Sie sind dadurch erhältlich, daß man zwei- bis vierwertige Alkohole, vorzugsweise alkoxylierte zwei- bis vierwertige Alkohole entweder
1. mit Thionylchlorid unter HCl-Abspaltung und nachfolgender katalytischer Zersetzung der chlorsulfonierten Verbindungen unter Schwefeldioxidabspaltung umsetzt oder
2. mit Phosgen unter HCl-Abspaltung in die entsprechenden Bis-chlorkohlensäureester überführt und daraus anschließend durch katalytische Zersetzung unter Kohlendioxidabspaltung α,ω-Dichlorether erhält.

Als Alkoholkomponente werden vorzugsweise ethoxylierte und/oder propoxylierte Glykole eingesetzt, die mit 1 bis 100, insbesondere 4 bis 40 Mol Ethylenoxid pro Mol Glykol zur Reaktion gebracht werden.

Andere geeignete Vernetzer sind α,ω- oder vicinale Dichloralkane, beispielsweise 1,2-Dichlorethan, 1,2-Dichlorpropan, 1,3-Dichlorpropan, 1,4-Dichlorbutan und 1,6-Dichlorhexan. Beispiele für weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxilierte oder propoxilierte Glycerine, Polyglycerine mit 2 bis 15 Glycerin-Einheiten im Molekül sowie gegebenenfalls ethoxilierte und/oder propoxilierte Polyglycerine. Vernetzer dieser Art sind beispielsweise aus der oben angegebenen DE-C-2 916 356 bekannt. Außerdem eignen sich Vernetzer, die blockierte Isocyanat-Gruppen enthalten, z.B. Trimethylhexamethylendiisocyanat blockiert mit 2,2,3,6-Tetramethylpiperidinon-4. Solche Vernetzer sind bekannt, vgl. beispielsweise DE-A-4 028 285, sowie Aziridin-Einheiten enthaltende Vernetzer auf Basis von Polyethern oder substituierten Kohlenwasserstoffen, z.B. 1,6-Bis-N-aziridinohexan, vgl. US-A-3 977 923. Es ist selbstverständlich auch möglich, Mischungen aus zwei oder mehreren Vernetzern zur Molekulargewichtserhöhung zu verwenden.

Die wasserlöslichen Kondensationsprodukte sind dadurch erhältlich, daß man die Verbindungen der Gruppe (a) mit den Verbindungen der Gruppen (b) und (c) umsetzt. Diese Umsetzung kann in der Weise durchgeführt werden, daß man zunächst die Verbindungen der Gruppen (a) und (b) zur Reaktion bringt und erst danach die Verbindungen der Gruppe (c) zusetzt. Man kann jedoch auch die Verbindungen (b) und (c) gleichzeitig mit den Verbindungen (a) umsetzen. Bei der zweistufigen und bei der einstufigen Reaktionsführung arbeitet man in der Regel - damit die Reaktionen ausreichend schnell ablaufen - bei höheren Temperaturen, z.B. in dem Temperaturbereich von 10 bis 200°C, vorzugsweise 30 bis 90°C. Bei der Umsetzung entstehen wasserlösliche Kondensationsprodukte, die in 20 gew.-%iger wäßriger Lösung bei 20°C eine Viskosität von mindestens 100 mPas haben. Die Viskosität der erfindungsgemäßen Kondensationsprodukte kann bis zu 100 Pas betragen und liegt vorzugsweise in dem Bereich von 200 bis 2000 mPas (gemessen in 20 gew.-%iger wäßriger Lösung bei 20°C).

Die Komponenten (a), (b) und (c) können in beliebigen Verhältnissen eingesetzt werden. Um jedoch direkt anwendbare wasserlösliche Kondensationsprodukte zu erhalten, setzt man die Verbindungen (a) und (b) in einem solchen Verhältnis ein, daß in dem Umsetzungsprodukt aus (a) und (b) noch 20 bis 99, vorzugsweise 30 bis 85 1 der primären und sekundären Aminogruppen von (a) unverändert bleiben. Die Verbindungen (c) werden, bezogen auf die Verbindungen (a) vorzugsweise in einem Verhältnis von 1:0,001 bis 1:10, insbesondere 1:0,05 bis 1:2 eingesetzt.

Bei dem Verfahren zur Herstellung der wasserlöslichen Kondensationsprodukte setzt man gemäß einer Ausführungsform die Verbindungen der Gruppe (a) mit den Verbindungen der Gruppe (b) um und läßt die Umsetzungsprodukte anschließend mit den Verbindungen (c) zu wasserlöslichen Kondensationsprodukten abreagieren, die in 20 gew.-%iger wäßriger Lösung bei 20°C eine Viskosität von mindestens 100 mPas haben. Die Verbindungen (b) und (c) können jedoch auch gleichzeitig mit den Verbindungen der Gruppe (a) umgesetzt werden. Diejenigen Verbindungen der Gruppe (b), die eine monoethylenisch ungesättigte Doppelbindung enthalten, reagieren bei beiden Verfahrensvarianten mit den Verbindungen der Gruppe (a) nach Art einer Michael-Addition, während Chlorcarbonsäuren und die obengenannten Glycidylverbindungen der Formel I über die Chlorgruppe oder die Epoxidgruppe mit den primären oder sekundären Aminogruppen der Verbindungen der Gruppe (a) reagieren.

Die oben beschriebenen wasserlöslichen Kondensationsprodukte werden als Entwässerungs-, Flockungs- und Retentionsmittel bei der Herstellung von Papier eingesetzt. Sie werden dabei dem Papierstoff in einer Menge von 0,01 bis 2, vorzugsweise 0,02 bis 1 Gew.-% zugesetzt, jeweils bezogen auf die Feststoffe. Die erfindungsgemäßen Kondensationsprodukte haben gegenüber den bekannten, ähnlich aufgebauten Kondensationsprodukten, z.B. solchen, die durch Kondensieren von (a) und (c) erhältlich sind, den Vorteil, daß sie bei der Papierherstellung im sauren pH-Bereich auch bei Einsatz höherer Alaunmengen, z.B. von mindestens 3 Gew.-% Alaun, sehr wirksam sind.

Die erfindungsgemäßen Kondensationsprodukte können zur Herstellung sämtlicher Papier-, Pappe- und Kartonqualitäten eingesetzt werden, z.B. Papiere für den Zeitungsdruck (Hochdruck/Offset-Druck), sogenannte mittelfeine Schreib- und Druckpapiere, Naturtiefdruckpapiere und auch leichtgewichtige Streichrohpapiere. Zur Herstellung solcher Papiere verwendet man als Hauptrohstoffkomponente Holzschliff, thermomechanischen Stoff (TMP), chemo-thermomechanischen Stoff (CTMP), Druckschliff (PGW), sowie Sulfit- und Sulfatzellstoff, die jeweils kurz- bzw. langfaserig sein können. Als Rohstoffe für die Herstellung der Pulpe kommt auch Zellstoff und Holzstoff in Betracht, der in den sogenannten integrierten Fabriken in mehr oder weniger feuchter Form direkt ohne vorherige Eindickung bzw. Trocknung weiter zu Papier verarbeitet wird und aufgrund der nicht vollständig entfernten Verunreinigungen vom Aufschluß her noch Stoffe enthält, die den üblichen Papierherstellprozeß stark stören. Nach dem erfindungsgemäßen Verfahren können sowohl füllstoff-freie als auch füllstoff-haltige Papiere hergestellt werden. Der Füllstoffgehalt im Papier kann bis maximal 30 Gew.-% betragen und liegt vorzugsweise in dem Bereich von 5 bis 25 Gew.-% Füllstoff. Geeignete Füllstoffe sind beispielsweise Ton, Kaolin, Kreide, Talkum, Titandioxid, Calciumsulfat, Bariumsulfat, Aluminiumoxid, Satinweiß oder Mischungen der genannten Füllstoffe. Sofern Füllstoffe enthaltende Papiere hergestellt werden, stellt man zunächst eine wäßrige Anschlämmung von Faserstoff und Füllstoff her.

Die Prozentangaben in den Beispielen sind Gew.-%. Die Viskositäten wurden in wäßriger Lösung in einem Brookfield-Viskosimeter bei einer Konzentration von 20 Gew.-% und einer Temperatur von 20°C gemessen, sofern nichts anderes angegeben ist.

### Beispiel 1

Nach der in der US-A-4 144 123 angegebenen Vorschrift wird durch Kondensieren von Adipinsäure mit einem Gemisch aus Ethylenpropylentriamin und Ethylendipropylentetraamin ein Polyamidoamin hergestellt und anschließend mit Ethylenimin gepfropft. Das Polyamidoamin enthält pro basischer Stickstoffgruppierung 3 Ethylenimineinheiten aufgepfropft.

In einem 2 l fassenden Kolben, der mit Rührer und einer Vorrichtung für das Arbeiten unter Stickstoffatmosphäre ausgestattet ist, werden 990 g einer 37,5 %igen wäßrigen Lösung des oben beschriebenen Polyamidoamins vorgelegt und mit 53 g Acrylsäure versetzt. Das Reaktionsgemisch wird gerührt und 3 Stunden unter Rühren bei einer Temperatur von 80°C gehalten. Danach entnimmt man dem Kolben 451 g des Additionsproduktes des mit Ethylenimin gepfropften Polyamidoamins an Acrylsäure, gibt 300 g Wasser zu und legt die wäßrige Lösung des Additionsproduktes in einem 1 1 fassenden Kolben vor, erhitzt den Kolbeninhalt auf eine Temperatur von 70°C und fügt unter Rühren 82,7 ml einer 21,7 %igen wäßrigen Lösung des α,ω-Bischlorhydrinethers eines Polyethylenoxids der Molmasse 400 zu und rührt das Reaktionsgemisch 3 Stunden bei einer Temperatur von 70°C. Das Reaktionsgemisch wird dabei soweit vernetzt, bis es eine Viskosität von 830 mPas (gemessen an Proben bei 20°C und einer Konzentration von 20 Gew.-%) hat.

### Beispiel 2

In einem 4 l fassenden Kolben, der mit Rührer, Rückflußkühler und einer Vorrichtung für das Arbeiten unter einer Stickstoffatmosphäre ausgestattet ist, werden 1098 g Polyethylenimin einer mittleren Molmasse (M_{w}) von 20 000 vorgelegt und mit 921 g Wasser verdünnt. Man fügt dann 263 g Acrylsäure zu und erhitzt das Reaktionsgemisch 3 Stunden auf eine Temperatur von 80°C.

351,8 g des oben beschriebenen Michael-Additionsprodukts von Polyethylenimin an Acrylsäure werden in einem mit einem Rührer, Rückflußkühler und Vorrichtung für das Arbeiten unter Stickstoff ausgestatteten Kolben vorgelegt, mit 448 g Wasser verdünnt und auf eine Temperatur von 70°C erwärmt. Sobald diese Temperatur erreicht ist, fügt man innerhalb von 120 Minuten 29,3 ml einer 21,7 %igen wäßrigen Lösung des Bischlorhydrinethers eines Polyalkylenglykols einer mittleren Molmasse von 400 zu und rührt das Reaktionsgemisch noch 3 Stunden bei einer Temperatur von 70°C. Dem Reaktionsgemisch werden Proben entnommen, um den Fortschritt der Reaktion zu kontrollieren. Sobald das Reaktionsgemisch eine Viskosität von 1700 mPas (bestimmt bei 20°C in 20 gew.-%iger wäßriger Lösung) hat, wird das Reaktionsgemisch auf Raumtemperatur abgekühlt und es kann direkt als Retentions- und Entwässerungsmittel bei der Papierherstellung eingesetzt werden.

### Beispiel 3

Nach der in Beispiel 2 angegebenen Vorschrift setzt man 762 g einer 48,2 %igen wäßrigen Lösung eines Polyethylenimins mit einer mittleren Molmasse von 2000 g pro Mol mit 205 g Acrylsäure bei einer Temperatur von 80°C um und gibt anschließend 914 g einer 21,7 %igen wäßrigen Lösung des Bischlorhydrinethers von Polyethylenglykol einer mittleren Molmasse von 400 zu. Man erhält eine wäßrige Lösung mit einem Feststoffgehalt von 22,7 % und einer Viskosität von 570 mPas (bestimmt in 20 %iger wäßriger Lösung bei 20°C).

### Beispiel 4

Wie in Beispiel 2 angegeben, setzt man 871 g einer 48,2 %igen wäßrigen Lösung eines Polyethylenimins der mittleren Molmasse von 2000 g pro Mol mit 120 g Acrylsäure bei einer Temperatur von 80°C um und vernetzt anschließend das Michael-Additionsprodukt von Polyethylenimin an Acrylsäure durch Zugabe von 1034 g einer 21,7 %igen wäßrigen Lösung des Bischlorhydrinethers eines Polyalkylenglykols der mittleren Molmasse 1500 g pro Mol. Man erhält eine 23,7 %ige wäßrige Lösung eines Kondensationsprodukts, das in 20 %iger wäßriger Lösung bei 20°C eine Viskosität von 970 mPas hat.

### Beispiel 5

433 g des im Beispiel 2 beschriebenen Michael-Additonsproduktes von Polyethylenimin an Acrylsäure werden mit 725 g Wasser verdünnt und durch Zugabe von 115 ml einer 21,6 %igen wäßrigen Lösung eines α,ω-Bischlorhydrinethers von Polyethylenglykol einer mittleren Molmasse von 400 bei einer Temperatur von 70°C soweit vernetzt, daß die Viskosität des Reaktionsgemisches, gemessen in 20 gew.-%iger wäßriger Lösung bei 20°C, 1000 mPas beträgt. Um eine weitere Vernetzung des Kondensationsproduktes zu stoppen, setzt man 0,5 ml einer 50 %igen wäßrigen Lösung von Hydroxylammoniumsulfat und 2 ml einer 50 %igen wäßrigen Lösung von Natriumbisulfid zu. Der pH-Wert des Kondensationsproduktes wird anschließend auf 8 eingestellt.

### Beispiel 6

Nach der im Beispiel 2 angegebenen Vorschrift stellt man ein Michael-Additionsprodukt aus Acrylsäure und einem Polyethylenimin der mittleren Molmasse von 2000 im Gewichtsverhältnis 1:7 her. 351 g des Additionsprodukts und 448 g Wasser werden anschließend durch Zugabe von 331,7 ml einer 21 %igen wäßrigen Lösung eines Bischlorhydrinethers eines Polyethylenglykols der mittleren Molmasse 400 vernetzt. Die Kondensationsreaktion wird soweit geführt, bis eine 20 %ige wäßrige Lösung des Kondensationsprodukts bei 20°C eine Viskosität von 640 mPas hat.

### Kondensationsprodukt A

Zum Vergleich mit dem Stand der Technik wird ein handelsübliches Kondensationsprodukt, das nach Beispiel 3 der US-A-4 144 123 erhältlich ist, getestet. Hierbei handelt es sich um ein mit Ethylenimin gepfropftes Polyamidoamin aus Adipinsäure und Diethylentriamin, das mit Polyethylenglykoldichlorhydrinether vernetzt ist.

### Anwendungstechnische Prüfungen

Bestimmung der Entwässerungszeit: 1 l der zu prüfenden Papierstoffsuspension wird jeweils in einem Schopper-Riegler-Testgerät entwässert. Die Zeit, die für verschiedene Auslaufvolumina ermittelt wird, wird als Kriterium für die Entwässerungsgeschwindigkeit der jeweils untersuchten Stoffsuspension gewertet. Die Entwässerungszeiten wurden nach einem Durchlauf von 700 ml Wasser ermittelt.

### Optische Durchlässigkeit des Siebwassers

Sie wird mit Hilfe eines Photometers bestimmt und ist ein Maß für die Retention von Fein- und Füllstoffen. Sie wird in Prozent angegeben. Je höher der Wert für die optische Durchlässigkeit ist, desto besser ist die Retention.

### Beispiele 7 bis 14 und Vergleichsbeispiele 1 bis 4

Aus 67 Teilen TMP-Stoff und 33 Teilen unbedrucktem Zeitungsdruckpapier wurde eine Pulpe mit einer Stoffdichte von 2 g pro Liter hergestellt. Der pH-Wert der Pulpe wurde unter Zugabe von Schwefelsäure auf 4,8 eingestellt. Diese Pulpe wurde in mehrere Portionen geteilt, die mit den in der Tabelle angegebenen Mengen an Alaun versetzt wurden. Der pH-Wert sämtlicher Proben betrug 4,8 und wurde entweder durch Zugabe von Schwefelsäure bzw. Natronlauge korrigiert. Zu den Proben wurden dann die in der Tabelle angegebenen Kondensationsprodukte gemäß den Beispielen bzw. das Kondensationsprodukt A zugesetzt und die Entwässerungszeit und optische Durchlässigkeit des Siebwassers bestimmt. Die dabei erhaltenen Ergebnisse sind in der Tabelle angegeben. Die Kondensationsprodukte wurden in allen Fällen in einer Menge von 0,02 %, bezogen auf die Feststoffe der Pulpe zugesetzt.

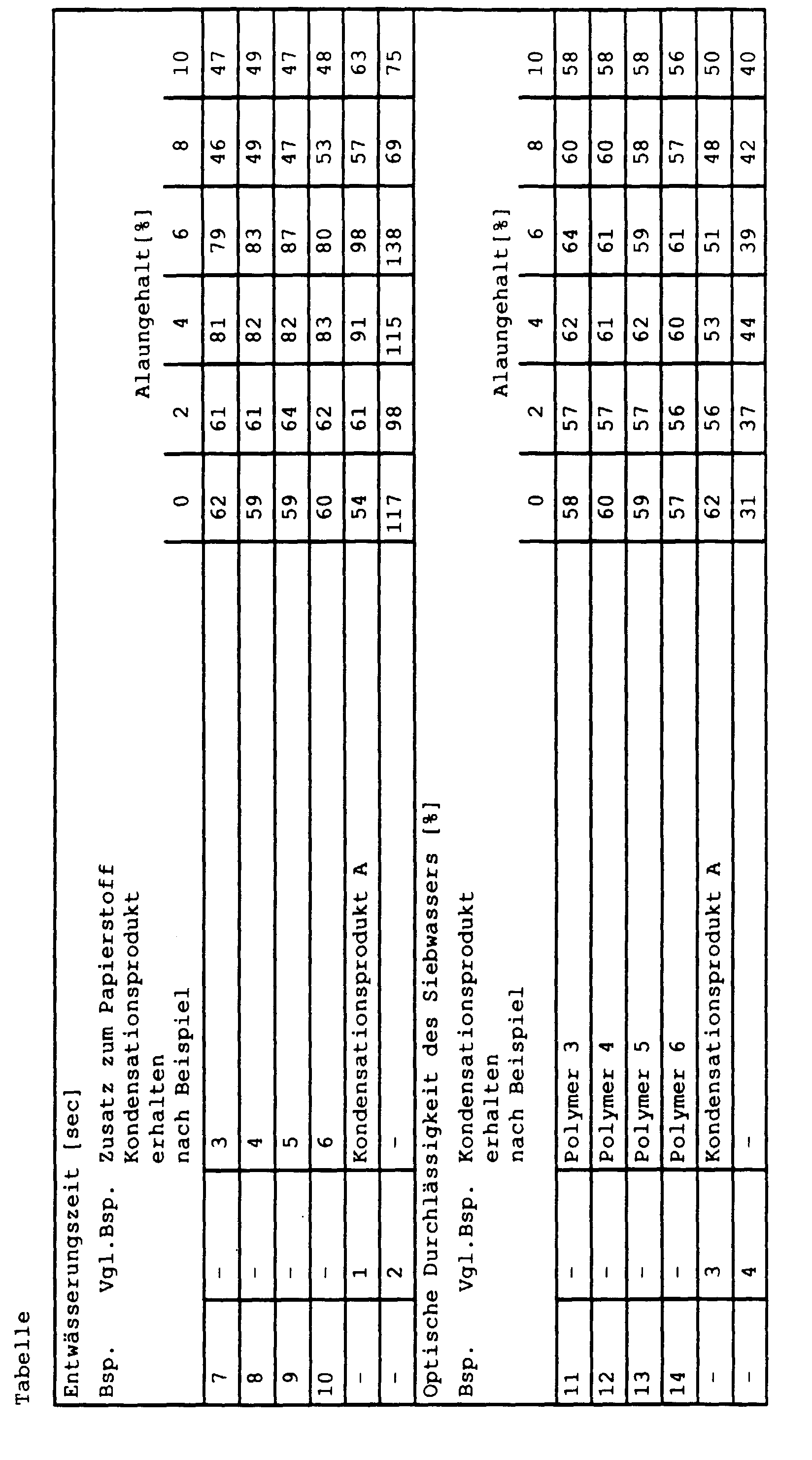

## Patentansprüche

1. Wasserlösliche Kondensationsprodukte aus Aminogruppen enthaltenden Verbindungen und mindestens bifunktionellen Vernetzern, dadurch gekennzeichnet, daß sie erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren nach Art einer Michael-Addition oder durch Reaktion mit Chlorcarbonsäuren und/oder Glycidylverbindungen der Formel 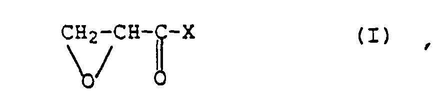 in der
X = -NH₂, -OMe, -OR
Me = H, Na, K, Ammonium und
R = C₁- bis C₄-Alkyl oder C₂- bis C₄-Hydroxyalkyl bedeuten,
und
(c) mindestens bifunktionellen Vernetzern, die als funktionelle Gruppe eine Halogenhydrin-, Glycidyl-, Aziridin- oder Isocyanat-Einheit oder ein Halogenatom aufweisen,
zu wasserlöslichen Kondensationsprodukten, die in 20 gew.-%iger wäßriger Lösung bei 20°C eine Viskosität von mindestens 100 mPas haben.

2. Wasserlösliche Kondensationsprodukte nach Anspruch 1, dadurch gekennzeichnet, daß man die Verbindungen (a) und (b) in einem solchen Verhältnis einsetzt, daß in dem Umsetzungsprodukt aus (a) und (b) noch 20 bis 99 % der primären und sekundären Aminogruppen von (a) unverändert bleiben und daß man die Verbindungen (c) im Gewichtsverhältnis (a) : (c) von 1 : 0,001 bis 1 : 10 einsetzt.

3. Verfahren zur Herstellung der wasserlöslichen Kondensationsprodukte nach Anspruch 1 oder 2, dadurch gekennzeichnet, daß man die Verbindungen (a) mit den Verbindungen (b) umsetzt, wobei monoethylenisch ungesättigte Carbonsäure, Salze, Ester, Amide oder Nitrile von monoethylenisch ungesättigten Carbonsäuren nach Art einer Michael-Addition umgesetzt werden, und die Umsetzungsprodukte anschließend mit den Verbindungen (c) zu wasserlöslichen Kondensationsprodukten reagieren läßt, die in 20 gew.-%iger wäßriger Lösung bei 20°C eine Viskosität von mindestens 100 mPas haben.

4. Verfahren nach Anspruch 3, dadurch gekennzeichnet, daß man die Verbindungen (b) und (c) gleichzeitig mit den Verbindungen (a) umsetzt.

5. Verwendung der Kondensationsprodukte nach Anspruch 1 oder 2 als Entwässerungs-, Flockungs- und Retentionsmittel bei der Herstellung von Papier.

## Claims

1. Water-soluble condensation products of amino-containing compounds and at least bifunctional crosslinkers, obtainable by reacting
(a) polyalkylenepolyamines, polyamidoamines, ethyleneimine-grafted polyamidoamines, polyetheramines and mixtures thereof with
(b) monoethylenically unsaturated carboxylic acids, salts, esters, amides or nitriles of monoethylenically unsaturated carboxylic acids by a Michael addition or by reaction with chlorocarboxylic acids and/or glycidyl compounds of the formula 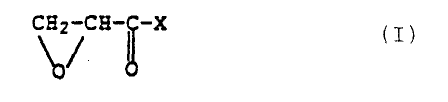 where
X is -NH₂, -OMe or -OR,
Me is H, Na, K or ammonium, and
R is C₁-C₄-alkyl or C₂-C₄-hydroxyalkyl, and
(c) at least bifunctional crosslinkers having a halohydrin, glycidyl, aziridine or isocyanate unit or a halogen atom as functional group,
to form water-soluble condensation products having a viscosity of at least 100 mPas in a 20% strength by weight aqueous solution at 20°C.

2. Water-soluble condensation products as claimed in claim 1, wherefor the compounds (a) and (b) are reacted in such a ratio that from 20 to 99% of the primary and secondary amino groups of (a) survive unchanged into the reaction product of (a) and (b) and the compounds (c) are used in a weight ratio of (a):(c) of from 1:0.001 to 1:10.

3. A process for preparing the water-soluble condensation products of claim 1 or 2, which comprises reacting the compounds (a) with the compounds (b), monoethylenically unsaturated carboxylic acids, salts, esters, amides or nitriles of monoethylenically unsaturated carboxylic acids being reacted by a Michael addition, and then reacting the products with the compounds (c) to form water-soluble condensation products which have a viscosity of at least 100 mPas in a 20% strength by weight aqueous solution at 20°C.

4. A process as claimed in claim 3, wherein the compounds (a), (b) and (c) are reacted all together.

5. The use of the condensation products of claim 1 or 2 as drainage, flocculation and retention aids in papermaking.

## Revendications

1. Produits de condensation solubles dans l'eau, issus de composés contenant des groupements amino et de réticulants au moins bifonctionnels, caractérisés en ce qu'ils sont obtenus par réaction
a) de polyalkylénepolyamines, de polyamidoamines, de polyamidoamines greffées avec de l'éthyléneimine, de polyétheramines ou de mélanges de ces composés avec
b) des acides carboxyliques à insaturation monoéthylénique, des sels, des esters, des amides ou des nitriles d'acides carboxyliques à insaturation monoéthylénique, à la manière d'une addition de Michael, ou par réaction avec des acides chlorocarboxyliques et/ou des composés glycidyliques de formule 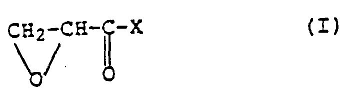 dans laquelle
X = -NH₂, -OMe, -OR,
Me= H, Na, K, ammonium et
R = reste alkyle en C₁-C₄ ou hydroxyalkyle en C₂-C₄, et
c) des réticulants au moins bifonctionnels qui comportent, comme groupement fonctionnel, un motif halohydrine, glycidyle, aziridine ou isocyanate ou un atome d'halogène,
pour obtenir des produits de condensation solubles dans l'eau qui ont, en solution aqueuse à 20% en poids, à 20°C, une viscosité d'au moins 100 mPa.s.

2. Produits de condensation solubles dans l'eau selon la revendication 1, caractérisés en ce que l'on utilise les composés (a) et (b) dans un rapport tel que, dans le produit de réaction de (a) et (b), il subsiste encore 20 à 99% des groupements amino primaires et secondaires de (a), et en ce que l'on utilise les composés (c) dans un rapport pondéral (a) : (c) de 1:0,001 à 1:10.

3. Procédé de préparation des produits de condensation solubles dans l'eau selon la revendication 1 ou 2, caractérisé en ce que l'on fait réagir les composés (a) avec les composés (b), des acides carboxyliques à insaturation monoéthylénique, des sels, des esters, des amides ou des nitriles d'acides carboxyliques à insaturation monoéthylénique étant mis en réaction à la manière d'une addition de Michael, et on fait ensuite réagir les produits de la réaction avec les composés (c) pour obtenir des produits de condensation solubles dans l'eau qui ont, en solution aqueuse à 20% en poids, à 20°C, une viscosité d'au moins 100 mPa.s.

4. Procédé selon la revendication 3, caractérisé en ce que l'on fait réagir simultanément les composés (b) et (c) avec les composés (a).

5. Utilisation des produits de condensation selon la revendication 1 ou 2 comme desséchants, floculants et agents de rétention dans la fabrication de papier.
